Europäisches Patentamt

European Patent Office

Office européen des brevets

(19)

(11) Veröffentlichungsnummer: **0 027 892**
**A2**

(12) **EUROPÄISCHE PATENTANMELDUNG**

(21) Anmeldenummer: **80105673.0**

(22) Anmeldetag: **20.09.80**

(51) Int. Cl.³: **G 05 D 11/13**

(30) Priorität: **04.10.79 DE 2940208**

(43) Veröffentlichungstag der Anmeldung: **06.05.81**
**Patentblatt 81/18**

(84) Benannte Vertragsstaaten: **CH DE FR GB IT LI**

(71) Anmelder: **BAYER AG, Zentralbereich Patente, Marken und Lizenzen, D-5090 Leverkusen 1, Bayerwerk (DE)**

(72) Erfinder: **Juffa, Richard, Ing. grad., Buchholzstrasse 38, D-5000 Koeln 80 (DE)**
Erfinder: **Boden, Heinrich, Sperberweg 14, D-5090 Leverkusen1 (DE)**
Erfinder: **Klups, Bernd, Im Kalkfeld 38, D-5204 Lohmar 21 (DE)**
Erfinder: **Rentz, Bernhard, Halenseestrasse 5, D-5090 Leverkusen 1 (DE)**

(54) **Verfahren und Vorrichtung zum Herstellen eines fliessfähigen Reaktionsgemisches aus mindestens zwei Reaktionskomponenten.**

(57) Zum Herstellen eines fließfähigen Reaktionsgemisches aus fließfähigen Komponenten, die beispielsweise Polyurethan bilden, erfolgt die Dosierung der Komponenten, indem mittels eines gemeinsamen Steuerfrequenzgenerators (14) eine Steuerfrequenz vorgegeben wird, aus der mittels Frequenzuntersetzern (38a, 38b) vorgewählte, von der Steuerfrequenz abgeleitete Frequenzen elektrohydraulischen Linearverstärkern (68, 69) aufgegeben werden, die diese Impulse jeweils einer zugeordneten Kolbendosierpumpe (18, 54) in Form von diskreten Schritten weitergeben, wodurch die Komponenten im vorgewählten Verhältnis, gegebenenfalls nach einem vorgegebenen Programm, in eine Mischkammer (80) dosiert werden.

BAYER AKTIENGESELLSCHAFT     5090 Leverkusen, Bayerwerk
Zentralbereich
Patente, Marken und Lizenzen   Mr/kl-c

Verfahren und Vorrichtung zum Herstellen eines fließfähigen Reaktionsgemisches aus mindestens zwei Reaktionskomponenten

In der DE-OS 28 05 946 ist eine Vorrichtung beschrieben, der ein Verfahren zum Herstellen eines fließfähigen Reaktionsgemisches aus mindestens zwei Reaktionskomponenten zugrundeliegt, beispielsweise Polyurethanbildende Komponenten. Dabei werden die Komponenten getrennt in Hydraulikräume gefördert und aus diesen in
eine Mischzone dosiert, dort vermischt und das Gemisch
in einen Hohraum entlassen, wobei die Dosierung der
Komponenten für jede Komponente getrennt, in einstellbaren diskreten gleichgroßen Volumenschritten erfolgt,
wobei sowohl deren zeitliche Aufeinanderfolge zur Einstellung einer vorgewählten Geschwindigkeit und eines
vorgewählten Dosierverhältnisses als auch deren Anzahl
zur Einstellung einer vorgewählten Dosiermenge auf
elektrohydraulischem Wege erzielt wird.

Hierbei ist den elektrohydraulischen Linearverstärkern
eine Steuerelektronik zugeordnet, die mindestens einen
einstellbaren Steuerfrequenzgenerator für einen Dosier-

Le A 19 902

- 2 -

kolben umfaßt und je einen einstellbaren Frequenzuntersetzer für jeden weiteren Dosierkolben aufweist.

Nachteilig ist dabei, daß die Dosiermenge desjenigen Dosierkolbens, dessen Linearverstärker direkt mit dem Steuerfrequenzgenerator verbunden ist, immer größer sein muß
als die der anderen Dosierkolben, gleiche Kolbenquerschnitte vorausgesetzt. Dies ist dadurch bedingt, daß
dieser Linearverstärker mit einer höheren Frequenz gespeist werden muß als alle anderen Linearverstärker.
Die Programme der verschiedenen Dosierkolbenpumpen sind
alle von dem Programm einer ersten Dosierpumpe abhängig,
denn die Dosiergeschwindigkeit des ersten Dosierkolbens
wird nur durch die Impulsfrequenz des einstellbaren
Frequenzgenerators bestimmt, die aber auch alle anderen
Frequenzuntersetzer beaufschlagt.

Es besteht sonach die Aufgabe, jede der Dosierkolbenpumpen so einstellen zu können, daß sie unabhängig von
der Dosiercharakteristik der weiteren Pumpen für die
Dosierung einer Reaktionskomponente zur Verfügung steht.

Dies wird gemäß der Erfindung dadurch erreicht, daß
die zeitliche Aufeinanderfolge der Volumenschritte
entsprechend dem vorgewählten Dosierverhältnis für
jede Komponente getrennt aus einer gemeinsamen einstellbaren Steuerfrequenz abgeleitet wird.

Dadurch wird erreicht, daß auch der Linearverstärker

Le A 19 902

- 3 -

des ersten Dosierkolbens mit einer niedrigeren Frequenz gespeist werden kann, als diejenigen der anderen, was die gewünschte niedrigere Dosiermenge pro Zeiteinheit zur Folge hat.

Nach einer besonderen Durchführungsform des Verfahrens wird das Verhältnis der zeitlichen Aufeinanderfolge der diskreten Volumenschritte für die verschiedenen Komponenten untereinander während des Dosiervorganges nach einem vorgegebenen Programm verändert.

Damit läßt sich das Verfahren beispielsweise zum Herstellen von Formteilen mit Zonen unterschiedlicher Eigenschaften anwenden, indem während des Mischvorganges, der im wesentlichen mit dem Formfüllvorgang gleichzeitig abläuft, das Dosierverhältnis der Komponenten verändert wird.

Nach einer weiteren Ausschmückung des Verfahrens wird die gemeinsame Steuerfrequenz zur Erzeugung der verschiedenen Volumenschrittfolgen für die einzelnen Komponenten, nach einem vorgegebenen Programm während des Dosiervorganges zeitlich verändert.

Der besondere Vorteil dieses Verfahrens besteht in der Möglichkeit, die Dosiergeschwindigkeit eines Reaktionsgemisches während des Mischvorganges über ein Programm zu verändern und den Bedingungen zum Füllen des Formwerkzeuges anzupassen, und zwar bei konstantem, gegenüber dem in der DE-OS 2 805 946 offenbarten Verfahren wesentlich vergrößertem Freiheitsgrad und vorwählbarem Dosierverhältnis der Reaktionskomponenten zueinander.

Le A 19 902

BAD ORIGINAL

- 4 -

Die erfindungsgemäße Vorrichtung zur Durchführung des Verfahrens geht aus von der in der DE-OS 28 05 946 offenbarten Vorrichtung, bestehend aus einer Dosiereinheit je Komponente, die aufgebaut ist aus Kolben und Zylinder, einer von einem Vorratsgefäß in den Zylinder führenden Zuleitung, einer vom Zylinder zur Mischkammer führenden Ableitung, und gegebenenfalls einer Rücklaufleitung, und aus einer Antriebseinheit je Dosiereinheit, die als elektrohydraulischer Linearverstärker ausgebildet ist, bestehend aus einem Schrittmotor für eine Steuereinrichtung, die mit einer Kolben-Zylinder-Einheit gekoppelt ist; wobei dem Linearverstärker eine Steuerelektronik zugeordnet ist, die mindestens einen einstellbaren Steuerfrequenzgenerator umfaßt.

Das Neue ist darin zu sehen, daß der Steuergenerator sämtlichen Linearverstärkern zugeordnet ist, wobei zwischen dem Steuerfrequenzgenerator und den Linearverstärkern jeweils ein einstellbarer Frequenzuntersetzer angeordnet ist.

Dadurch wird der Vorteil geboten, daß auch der Linearverstärker des ersten Dosierkolbens mit geringerer Frequenz gespeist werden kann als alle anderen Linearverstärker. Dies macht es möglich, die Dosiermenge des zugeordneten Kolbens pro Zeiteinheit kleiner zu halten als die der anderen. Denn alle Frequenzuntersetzer beziehen ihre Eingangsfrequenz aus dem gemeinsamen Steuerfrequenzgenerator. Während bei der vorbekannten Ausführungsform das Verhältnis der Dosiermengen - bei

Le A 19 902

gleichen Kolbenquerschnitten - zwischen besagtem Dosierkolben und den anderen Dosierkolben nur $\geq$ 99,9 gefahren werden kann, sind bei der erfindungsgemäßen Ausführungsform Dosierverhältnisse $\lesseqgtr$ 100:>100 und 100:<100 möglich. Ein weiterer Vorteil ergibt sich bei der Programmierung der Dosiergeschwindigkeiten. Nach der erfindungsgemäßen Ausführungsform ist es nunmehr möglich, jedem Frequenzuntersetzer und damit jedem Dosieraggregat ein getrenntes Volumen-Zeit-Programm über den jeweiligen Frequenzuntersetzer aufzugeben, und zwar unabhängig von den Programmen der anderen Dosieraggregate. Damit besteht die besonders vorteilhafte Möglichkeit, auch mehrere, gegebenenfalls unterschiedliche, aus mehreren Reaktionskomponenten herzustellende Reaktionsgemische zeitsynchron oder "überlappend" von einer gemeinsamen Steuerung ausgehend auch mit während des Mischvorganges veränderlicher Füllgeschwindigkeit der einzelnen Reaktionsgemische zu Formteilen verarbeiten, und zwar bei sehr engen, sehr gut reproduzierbaren Toleranzen in allen Dosierparametern.

Für die Erzeugung der Volumenschritte werden elektrohydraulische Linearverstärker verwendet.

Elektrohydraulische Linearverstärker sind im Handel erhältlich. Sie bestehen aus einem Schrittmotor, einer Steuervorrichtung und einer Hydraulik-Kolben-Zylindereinheit. Die Steuervorrichtung besteht beispielsweise aus einer Gewindespindel, einer Spindelmutter und einem Steuerschieber oder einem Steuerventil. Der besondere Vorteil solcher Linearverstärker liegt darin, daß die

Le A 19 902

- 6 -

Kraft durch die Kolbenstange direkt auf das zu bewegende Maschinenteil, also auf die Dosierkolben, welche in die Dosierzylinder eintauchen, übertragbar ist. Die aufwendigen und oft mit Spiel behafteten Übertragungsmechanismen rotierender Antriebe werden dadurch vermieden. Trotzdem wird eine äußerst präzise Bewegungskontrolle bei hoher Systemsteifigkeit erreicht. Damit eignen sich solche Antriebe für spielfreie Vorschubbewegungen wie auch für exakte Positionierungen. Solche Linearverstärker sind beispielsweise beschrieben im Prospekt "Electro-Hydraulic Linear Amplifier Model Series LVS", WF 24, 30e, Edition 10, No. 30.23.521.2 der Firma SIG, Schweizerische Industriegesellschaft CH-9212 Neuhausen am Rheinfall, Schweiz.

Die Erfindung ermöglicht es, die am Steuerfrequenzgenerator und je einen jeder Dosierpumpe zugeordneten Frequenzuntersetzer die vorgewählte Steuerfrequenz über den Schrittmotor des Linearverstärkers in analoge, exakt reprodzierbare Vorschub- und damit Dosierschritte umzusetzen. Damit ist der Quotient der an den Frequenzuntersetzern für verschiedene Dosierpumpen eingestellten Steuerfrequenzen - gleiche Dosierkolbendurchmesser vorausgesetzt - gleich dem volumetrischen Dosierverhältnis der Reaktionskomponenten. Da der Steuerfrequenzquotient, der dem volumetrischen Dosierverhältnis entspricht, auch bei Änderung der vorgewählten Steuerfrequenz am Steuerfrequenzgenerator gegenüber allen Frequenzuntersetzern reproduzierbar konstant bleibt, ergibt sich in besonders vorteilhafter Weise eine einfache reproduzierbare Beeinflussung der Gesamtdosiergeschwindigkeit

Le A 19 902

- 7 -

aller Dosiereinheiten bei exakt konstantem, volumetrischem Dosierverhältnis. Zusätzlich gestattet die Vorwahl einer Impulssumme an dem Linearverstärker einer Dosiereinheit für einen Mischhub die Vorwahl eines Hubweges und damit die exakte Steuerung einer Dosiermenge. Die für die Steuerung verwendeten Steuerfrequenzen liegen zwischen 50 und 50 000 Hz, vorzugsweise zwischen 100 und 10 000 Hz. In diesen Bereichen kann die Steuerfrequenz und damit die Dosiergeschwindigkeit während eines Dosierhubes reproduzierbar verändert werden. Dadurch wird die Herstellung von Formteilen, die räumlich variierende Eigenschaften aufweisen, möglich.

Der gesamte Dosierhub ist normalerweise in Vorhub, eigentlichen Mischhub und Nachhub, an den sich schließlich der Rückhub, mit dem die Dosierzylinder wieder gefüllt werden, anschließt, unterteilt. Man wählt einen Vorhub, um beim Anfahren die Strömungsverhältnisse vor dem Beginn des Mischhubes zu stabilisieren. Während des Vorhubes werden alle Reaktionskomponenten im Kreislauf in die Vorratsbehälter zurückgeleitet. Mit dem Ende des Vorhubes beginnt der Mischhub. Während des Mischhubes werden die Reaktionskomponenten in die Mischkammern injiziert, dort vermischt und als Reaktionsgemisch in die Höhlung eines Formwerkzeuges geleitet. An den Mischhub schließt sich ein kurzer Nachhub an. Während des Nachhubes werden die Reaktionskomponenten wieder im Kreislauf in die Vorratsbehälter zurückgeleitet.

Die erfindungsgemäße Vorrichtung ist anhand zweier Ausführungsbeispiele in einer Zeichnung rein schematisch

Le A 19 902

- 8 -

dargestellt und im Zusammenhang mit dem Verfahren nachstehend näher erläutert. Es zeigen:

Fig. 1 Eine Vorrichtung zur Durchführung des Verfahrens.

Fig. 2 einen Elektro-hydraulischen Linearverstärker im Längsschnitt,

Fig. 3 eine vereinfachte Darstellung einer um zwei Dosierpumpen erweiterten Vorrichtung und

Fig. 4 die schematische Darstellung eines Verfahrensablaufs mit zwei Mehrkomponenten-Reaktionsmischungen unter Benutzung der Vorrichtung gemäß Fig. 3.

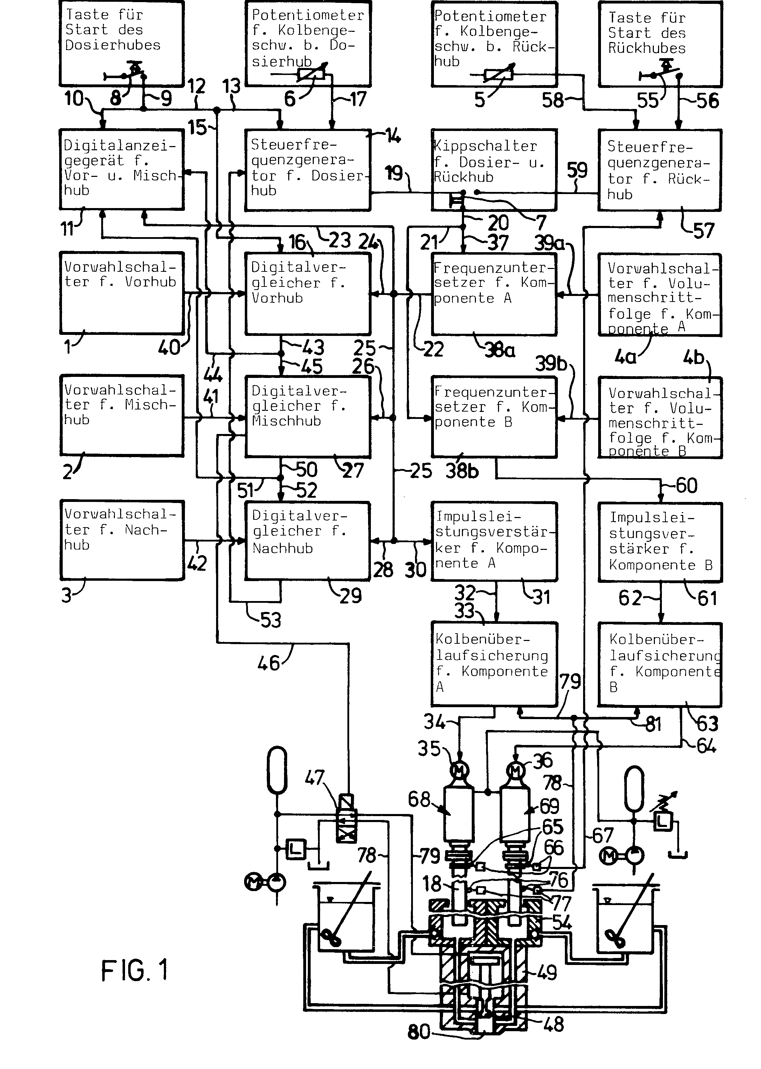

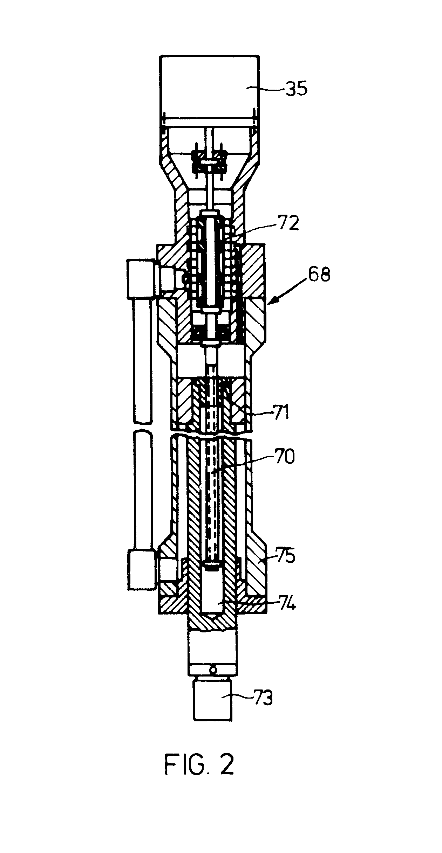

In Fig. 1, 2 ist mittels eines Vorwahlschalters 1 die Größe des Vorhubes einstellbar. Ein Vorwahlschalter 2 dient der Einstellung der Größe des Mischhubes. Der Nachhub ist mittels eines weiteren Vorwahlschalters 3 einstellbar. Weiterhin ist mittels eines Vorwahlschalters 4a die zeitliche Aufeinanderfolge der konstanten Volumenschritte der Komponente A, und mit dem Vorwahlschalter 4b die zeitliche Aufeinanderfolge der konstanten Volumenschritte der Komponente B vorzuwählen.

Die Kolbengeschwindigkeit für den Rückhub ist mit einem Potentiometer 5 wählbar, die des Dosierhubes, der sich aus Vorhub, Mischhub und Nachhub zusammensetzt, mit einem Potentiometer 6. Schließlich ist für die Vorwahl noch der Kippschalter 7 vorhanden, der zu Beginn des Arbeitsvorganges auf "Dosierhub" zu stellen ist.

Le A 19 902

- 9 -

Nach den durchgeführten Vorwahlen ist die Vorrichtung startbereit:

Die Taste 8 dient dem Start des Dosierhubes, womit über Leitungen 9,10 das Gerät 11 für die Digitalanzeige auf "0" stellbar ist, während über Leitungen 9,12, 13 der Steuerfrequenzgenerator 14 für den Dosierhub ansprechbar ist. Über Leitungen 9,12,15 ist schließlich noch der Digitalvergleicher 16 für den Vorhub aktivierbar. Vom Potentiometer 6 für die Vorwahl der Dosierkolbengeschwindigkeit für den Dosierhub, ist über Leitung 17 der Steuerfrequenzgenerator 14 beeinflußbar. Durch die Einstellung der Geschwindigkeit der Dosierkolben 18, 54 mittels des Potentiometers 6, ist die Steuerfrequenz des Steuerfrequenzgenerators 14 für die Dosierhübe vorwählbar. Sie gelangt über Leitung 19, den Kippschalter 7, Leitungen 20, 37, Frequenzuntersetzer 38a und Leitungen 22, 23 zum Eingang des Digitalanzeigegerätes 11, das den Vor- und Mischhub vierstellig anzeigt. Außerdem steht sie gleichzeitig über Leitungen 20, 37, Frequenzuntersetzer 38a und Leitungen 22, 24 dem Digitalvergleicher 16 für den Vorhub, über Leitungen 20, 37 Frequenzuntersetzer 38 a und Leitungen 22, 25, 26 dem Digitalvergleicher 27 für den Mischhub, und über Leitungen 20, 37, Frequenzuntersetzer 38 a und Leitungen 22, 25, 28 dem Digitalvergleicher 29 für den Nachhub, zur Verfügung.

Der Steuerfrequenzgenerator 14 wird mit Starttaste 8 über die Leitungen 9,12,13 gestartet und vom Digitalvergleicher 29 für den Nachhub, über die Leitung 53

Le A 19 902

- 10 -

gestoppt. Die Steuerfrequenz des Steuergenerators 14 geht über die Leitung 19, den Umschalter 7 und die Leitungen 20, 37 zum Frequenzuntersetzer 38a für die Komponente A. Für die Komponente B führt die Steuerfrequenz über die Leitung 21 zum Frequenzuntersetzer 38b.

Die Ausgangsfrequenzen von den Frequenzuntersetzern 38a bzw. 38b gehen über die Leitungen 22, 25, 30 bzw. 60 zu Impulsleistungsverstärkern 31 bzw. 61 und weiter über die Leitungen 32 bzw. 62 zu Kolbenüberlaufsicherungen 33 bzw. 63, die vom Endlagenschalter 77 über die Leitungen 78, 79 bzw. 78, 81 gesteuert werden; und über Leitungen 34 bzw. 64 zu Steuermotoren 35 bzw. 36 der Linearverstärker 68 bzw. 69, die die Dosierkolben 18 bzw. 54 antreiben.

Um die Kolbenhübe wählen zu können, ist die Impulszahl, die für einen bestimmten Kolbenhub notwendig ist, in dem Digitalgergleicher 16 für den Vorhhub, vom Vorwahlschalter 1 über Leitung 40 kommend, vergleichbar; in dem Digitalvergleicher 27 für den Mischhub, vom Vorwahlschalter 2 über Leitung 41 kommend, vergleichbar; und in dem Digitalvergleicher 29 für den Nachhub, vom Vorwahlschalter 3 über Leitung 42 kommend, vergleichbar.

Der Weg des Vorhubs ist auf dem Digitalanzeigegerät 11 ablesbar. Bei Übereinstimmung zwischen den in den Digitalvergleicher 16 einlaufenden Impulsen mit dem eingestellten Wert am Vorwahlschalter 1 setzt der Digitalvergleicher 16 für den Vorhub ein Signal über Leitungen 43,44 an das Digitalanzeigegerät 11 ab und stellt dieses auf "0", während gleichzeitig über Leitungen 43,45 der Digitalvergleicher 27 für den Mischhub ansprechbar ist. Mit Anlaufen des Mischhubes ist über Leitung 46 ein elektromagnetisches Hydraulikventil 47 für den Steuerkolben 48 betätigbar, das über den gesamten Mischhub erregt bleibt. Hierdurch wird der Steuerkolben 48 des Mischkopfes 49 zu Beginn des Mischhubes in die obere Totpunktlage, die der Mischstellung entspricht, gefahren, in der er während des gesamten Mischhubes verharrt.

Mit dem Ende des Mischhubes besteht zwischen der Anzahl der einlaufenden Impulse in den Digitalvergleicher 27 für den Mischhub und der am Vorwahlschalter 2 eingeschalteten Impulszahl Übereinstimmung. Als Folge hiervon wird der Stromkreis zum elektromagnetischen Hydraulikventil 47 unterbrochen und damit das Ventil 47 umgesteuert, so daß der Steuerkolben 48 des Mischkopfes 49 in die untere Totpunktlage fährt und somit durch Unterbrechung des Komponentenzuflusses der Mischvorgang in der Mischkammer 80 beendet wird. Die Betätigung des Steuerkolbens 48 erfolgt ausgehend vom Hydraulikventil 47 über die Hydraulikleitungen 78 und 79 in bekannter Weise.

Anstelle des als Ausführungsbeispiel gezeichneten hydraulisch betätigten, Schieber-gesteuerten Injektions-Mischkopfes sind andere bekannte Mischköpfe mit hydraulischer oder pneumatischer Steuerung einsetzbar.

Außerdem wird über Leitungen 50,51 das Digitalanzeigegerät 11 gestoppt, so daß der Nachhub ohne Anzeige ab-

Le A 19 902

- 12 -

läuft, der durch Betätigung des Digitalvergleichers 29 über Leitungen 50,52 erfolgt. Sobald die vorgegebene Anzahl von Impulsen in den Digitalvergleicher 29 eingelaufen ist, also wieder Übereinstimmung zwischen Impulsanzahl und Einstellwert des Vorwahlschalters 3 besteht, entsteht ein Signal. Dieses Signal stoppt über Leitung 53 den Steuerfrequenzgenerator 14 für den Dosierhub und setzt die Vorrichtung still.

Mit Hilfe der Vorwahlschalter 4a und 4b, die über Leitungen 39a bzw. 39b mit den Frequenzuntersetzern 38a, 38b verbunden sind, wird die vom Steuerfrequenzgenerator 14 erzeugte Impulsfrequenz an den Frequenzuntersetzern 38a und 38b in je eine Frequenz umgewandelt und an die Schrittmotoren 35 bzw. 36 weitergeleitet. Mit diesen vorwählbaren Steuerfrequenzen werden die Schrittmotoren 35 und 36 und damit die Linearverstärker 68 bzw. 69 und die mit diesen gekoppelten Dosierkolben 18 bzw. 54 angetrieben.

Infolge der prozentualen Verhältnisvorwahl der Komponenten erhält der Schrittmotor 36 nur den prozentualen Anteil der Impulse des Schrittmotors 35. Der Dosierkolben 54 führt also nur den eingestellten Prozentsatz desjenigen Weges aus, den der Dosierkolben 18 zurücklegt.

Um einen neuen Dosiervorgang starten zu können, muß die Vorrichtung wieder in die Ausgangsstellung gebracht werden. Dazu ist der Kippschalter 7 auf die Rückhubstellung zu bringen.

Durch Betätigung der Taste 55 für den Rückhub ist über Leitung 56 der Steuerfrequenzgenerator 57 für den Rück-

Le A 19 902

hub betätigbar, der vom Potentiometer 5 über Leitung 58 die Einstellspannung für die vorgewählte Kolbengeschwindigkeit erhalten hat. Die Steuerfrequenz ist über Leitung 59, Kippschalter 7, Leitungen 20, 27, Frequenzuntersetzer 38 a, sowie Leitungen 22, dem Impulsleistungsverstärker 31 zuführbar, der über Leitung 32, Kolbenüberlaufsicherung 33 und Leitung 34 den Schrittmotor 35 antreibt. Gleichzeitig gelangt die Steuerfrequenz über Leitung 20, 21 an den Frequenzuntersetzer 38b, von wo sie über Leitung 60, Impulsleistungsverstärker 61, Leitung 62, Kolbenüberlaufsicherung 63 und Leitung 64 den Schrittmotor 36 antreibt. Die Dosierkolben 16, 54 sind in dem vorher eingestellten Geschwindigkeitsverhältnis in die Ausgangslage zurückfahrbar. Dort betätigen die Endkontakte 65 die Endschalter 66, so daß über Leitung 67 der Steuerfrequenzgenerator 57 und damit auch die Dosierkolben 18, 54 anhaltbar sind. Die elektrohydraulischen Linearverstärker sind mit 68, 69 bezeichnet.

Fig. 2 zeigt eine Ausführungsform eines elektrohydraulischen Linearverstärkers 68 mit folgendem Aufbau: Er besteht aus einem Schrittmotor 35, einer Steuervorrichtung, die sich zusammensetzt aus einer Gewindespindel 70, einer Spindelmutter 71 und einem Steuerschieber 72; sowie aus einer Hydraulik-Kolben-Zylindereinheit, die sich zusammensetzt aus dem Kolben 73, in dessen Hohlbohrung 74 die Gewindespindel 70 über die Spindelmutter 71 geführt ist, und dem Zylinder 75.

Der elektrische Schrittmotor 35 führt beispielsweise pro Impuls einen diskreten Schritt bei 0,9°C aus, d.h.,

0027892

- 14 -

nach 400 Impulsen hat er eine Umdrehung ausgeführt. Er wirkt zugleich als Steuer- und Meßsystem, ähnlich einem Schrittschaltwerk. Da ein solcher Linearverstärker 68 einen Lageregelkreis mit rotierendem Eingang bildet, ist jedem Schritt des Motors ein genau definiertes Hubinkrement des Kolbens 73 zugeordnet. Es können damit, je nach Gewindesteigung der Gewindespindel 70, kleinste Hubinkremente verfahren werden, ohne daß die Position durch ein aufwendiges Meßsystem erfaßt werden müßte. Ein weiterer Vorteil dieser Betriebsart liegt darin, daß mehrere Zylinder, auch unterschiedlicher Größe, von derselben Logik gesteuert werden können, wodurch absoluter Gleichlauf erzielbar ist. Veränderliche Belastungen am Kolben 73 können nicht auf den Schrittmotor 35 zurückwirken, da die hydraulische Kolben-Zylindereinheit 73,75 die erforderlichen Kräfte aufbringt.

Durch einen technischen Defekt kann es passieren, daß beim Dosiervorgang die Dosierkolben 18, 54 über den vorgewählten Gesamthub hinausfahren. Um in diesem Fall die wertvolle Vorrichtung vor Zerstörung zu schützen, ist die Kolbenüberlaufsicherung 33 für den Dosierkolben 18 und die Kolbenüberlaufsicherung 63 für den Dosierkolben 54 vorgesehen (s. Fig. 1). Beim Überlaufen der Kolben 18, 54 würden von den Kontakten 76 die Endschalter 77 betätigt. Das hätte zur Folge, daß über Leitungen 78,79,81 die Kolbenüberlaufsicherungen 33,63 angeregt würden, die die Steuerfrequenzen für die Schrittmotoren 35,36 unterbrächen und somit beide Dosierkolben 18, 54 anhalten würden.

Le A 19 902

- 15 -

Nachstehend ist die Arbeitsweise der in Fig. 1, 2 dargestellten Vorrichtung an einem praktischen Beispiel erläutert:

1.  Vorgaben durch die verwendeten Linearverstärker:

1.1  Elektrische Schrittmotoren 35/36 mit 400 Impulse/ Umdrehung

1.2  Steigung der Gewindespindeln 70 und Spindelmuttern 71 beträgt 20 mm.

Für die Dosierung der Komponenten sind folgende Betriebsparameter vorgegeben:

2.  Einstellungen bzw. Vorgaben für die Polyol-Komponente:

2.1  Vorhub 5 cm; eingestellt am Vorwahlschalter 1, der eine zweistellige Anzeige besitzt und einen Einstellbereich von 1 bis max. 16 cm aufweist;

2.2  Mischhub 30 cm; eingestellt am Vorwahlschalter 2, der eine vierstellige Anzeige besitzt und einen Einstellbereich von 0,01 bis 40,00 cm aufweist;

2.3  Nachhub 2 cm; eingestellt am Vorwahlschalter 3, der eine zweistellige Anzeige besitzt und einen Einstellbereich von 1 cm bis max. 16 cm aufweist;

0027892

- 16 -

2.4 Dosier- bzw. Rückhub (d.h. Saughub) ergeben sich damit zwangsläufig zu je 37 cm;

2.5 der Durchmesser des Dosierkolbens 18 beträgt 110 mm;

2.6 Kolbenfläche: 95,033 cm$^2$;

2.7 daraus läßt sich das Dosiervolumen der Polyolkomponente während des Mischhubes (Kolbenfläche 95,033 cm$^2$ x Mischhub 30 cm) zu 2851 cm$^3$ ermitteln;

3. Einstellungen bzw. Vorgaben für die Isocyanat-Komponente, die im Verhältnis zu 49 Vol.-% der Polyolkomponente dosiert werden soll:

3.1 Vorhub 2,45 cm, entsprechend 49 % des Vorhubs für die Polyolkomponente; eingestellt am Vorwahlschalter 1;

3.2 Mischhub 14,7 cm, entsprechend 49 % des Mischhubes für die Polyolkomponente; eingestellt am Vorwahlschalter 2;

3.3 Nachhub 0,98 cm, entsprechend 49 % des Nachhubes für die Polyolkomponente; eingestellt am Vorwahlschalter 3;

3.4 Dosier- und Rückhub (d.h. Saughub) ergibt sich damit zwangsläufig zu je 18,13 cm;

Le A 19 902

- 17 -

3.5 der Durchmesser des Dosierkolbens 54 beträgt 110 mm;

3.6 Kolbenfläche: 95,033 $cm^2$;

3.7 das Dosiervolumen der Isocyanat-Komponente während des Mischhubes ergibt sich daraus zu 1396,99 $cm^3$.

4. Weitere Vorgaben:

4.1 Verhältnis der Kolbengeschwindigkeiten entsprechend dem volumetrischen Mischungsverhältnis von 100:49 ebenfalls 49 %; eingestellt an den Vorwahlschaltern 4a und 4b, die eine dreistellige Anzeige von 0 bis 200 besitzen, mit den Skalenwerten 100 für Vorwahlschalter 4a, und Skalenwert 49 für Vorwahlschalter 4b;

4.2 die gewünschte Vorschub-Geschwindigkeit des Dosierkolbens 18 ist 10 cm/sec; durch Einstellung des Potentiometers 6, das eine zweistellige maximale Einstellbarkeit von 10 cm/sec aufweist, auf den Skalenwert 10;

4.3 die Vorhubgeschwindigkeit des Dosierkolbens 54 ergibt sich zwangsläufig zu 49 % derjenigen des Dosierkolbens 18 mit 4,9 cm/sec;

4.4 das gewünschte Gesamtdosiervolumen während des Mischhubes, das sich aus dem Produkt der Hubwege mit den Kolbenflächen ergibt, ist 4248 $cm^3$;

4.5 gewünschte Rückhubzeit 6 sec; sie ist einstellbar am Potentiometer 5, über

4.6 die gewünschte Rückhubgeschwindigkeit des Dosierkolbens 18. Sie wird eingestellt am Potentiometer 5, das eine zweistellige maximale Einstellbarkeit von 10 cm/sec aufweist, auf 3,6 cm/sec; entsprechend Skalenwert 3,6.

4.7 Die Rückhubgeschwindigkeit des Dosierkolbens 54 ergibt sich zwangsläufig zu 49 % derjenigen des Dosierkolbens 18, mit 1,734 cm/sec.

Nachdem der Kippschalter 7 auf "Vorhub" gestellt ist, also der Steuergenerator 14 über Kippschalter 7 mit Leitung 20 verbunden ist, ist die Vorrichtung betriebsbereit.

Bezüglich des Arbeitsablaufes wird auf die Beschreibung des Zeichnungsbeispiels verwiesen, so daß nachstehend nur darüber hinausgehende Informationen wiedergegeben werden:

Die Einstellung des Potentiometers 6 auf den Skalenwert 10 entspricht einer Steuerfrequenz am Schrittmotor 35 von 2 KHz. Es entsteht damit ein Impulsabstand von $t = 1/f = 1/2 = 0,5$ ms. Da der Schrittmotor 35 pro Impuls um 0,9° dreht, wird der Dosierkolben in 0,5 ms um 0,1 mm vorgeschoben. Er bewegt sich also mit einer Geschwindigkeit von 10 cm/sec. Der Schrittmotor 36 erhält nur 49 % der Steuerfrequenz des Schrittmotors

Le A 19 902

- 19 -

35, das sind 0,98 KHz. Damit beträgt der Impulsabstand t = 1/f = 1/0,98 = 1.02 ms. Das entspricht einer Geschwindigkeit des Dosierkolbens 54 von 4,9 cm/sec, da auch der Schrittmotor 36 pro Impuls um 0,9° dreht und den Dosierkolben 54 in 1,02 ms um 0,1 mm vorschiebt. Dementsprechend wird gemäß Beispiel während des gesamten, aus Vorhub, Mischhub und Nachhub bestehenden Dosiervorganges ein volumetrisches Dosierverhältnis von 1,02:0,5 entsprechend 100:49 aufrechterhalten. Dem Digitalvergleicher 16 für den Vorhub müssen entsprechend der Vorhubvorwahl von 5 cm bei einem Vorschub von 10 cm/sec 1000 Impulse zulaufen, um Übereinstimmung zu erzielen. Dem Digitalvergleicher 27 für den Mischhub werden entsprechend der Mischhubvorwahl von 30 cm bei einem Vorschub von 10 cm/sec 6000 Impulse zugeführt, um Übereinstimmung zu erzielen. Dem Digitalvergleicher 29 für den Nachhub schließlich werden entsprechend der Nachhubvorwahl von 2 cm bei einem Vorschub von 10 cm/sec 400 Impulse zugeführt, um Übereinstimmung zu erzielen.

Eine Erhöhung der Auflösungsgenauigkeit läßt sich im Bedarfsfall erreichen durch Einsatz von Schrittmotoren 35, 36 mit einer höheren Zahl von Impulsen pro Umdrehung. Zur Zeit sind beispielsweise Schrittmotoren erhältlich, die pro Impuls einen diskreten Schritt von 0,36° ausführen; d.h. nach 1000 Impulsen hat er eine Umdrehung ausgeführt. Gegenüber den im Beispiel beschriebenen Schrittmotoren mit 400 Impulsen pro Umdrehung führt diese Maßnahme insbesondere beim Anbau an Dosiergeräte mit größeren Dosierpumpen zu einer weite-

Le A 19 902

- 20 -

ren Erhöhung der Reproduziebarkeit und einer verbesserten Vergleichmäßigung des Dosierstromes um das
2,5-fache.

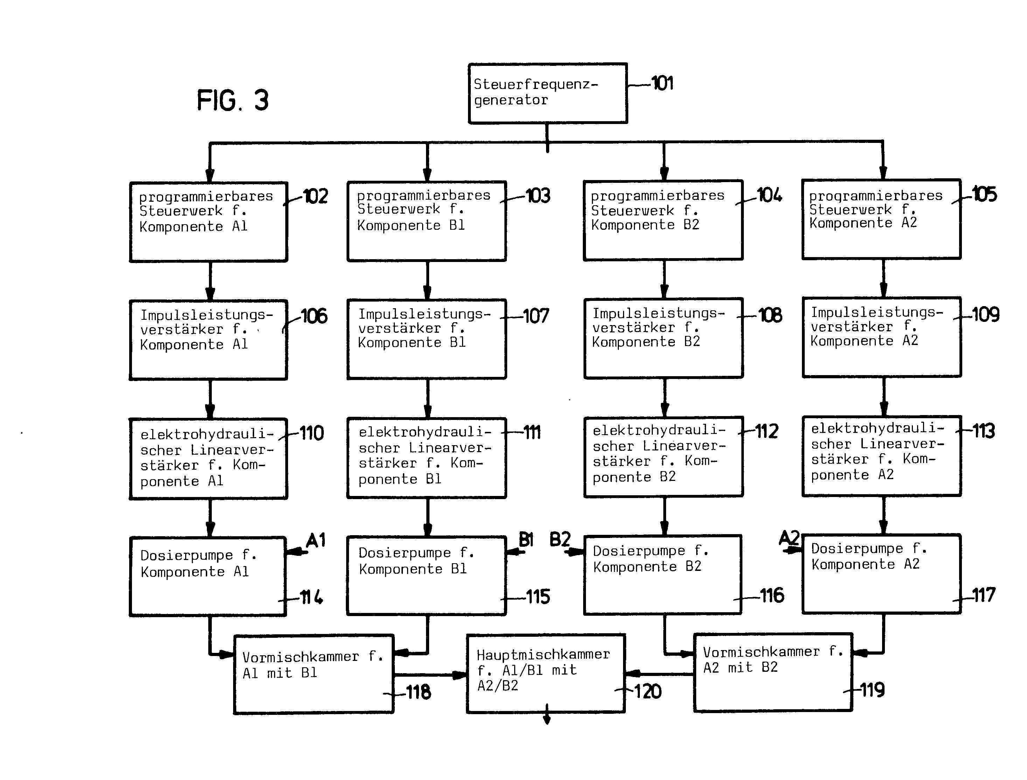

In Fig. 3 ist eine zur Herstellung eines Fahrzeugreifens aus Polyurethan-Kunststoff geeignete Vorrichtung
zum besseren Verständnis im Blockschema dargestellt.

Ein zentraler Steuerfrequenzgenerator 101 dient der
Erzeugung einer Impulsfrequenz. Nachgeschaltete, programmierbare Steuerwerke 102, 103, 104 und 105 mit
integrierten Frequenzuntersetzern wandeln
die vom Steuerfrequenzgenerator 101 empfangene Impulsfrequenz in zweimal zwei voneinander unabhängige,
vorwählbare, zeitkonstante oder zeitlich veränderliche Impulsfolgen um. Über die nachgeschalteten Impulsleistungsverstärker 106,107,108 und 109 werden diese
programmierten Impulsfolgen zugeordneten elektrohydraulischen Linearverstärkern 110,111,112 und 113 zugeführt
und in den mit diesen verbundenen Dosierpumpen 114,115,
116 und 117 in eine analoge Folge von gleich großen
Volumenschritten umgewandelt. Die Anzahl der Volumenschritte je Zeiteinheit liegt hierbei in jedem Falle
über der Volumenschrittfolge von 100 pro sec.

Über die Dosierpumpen 114,115 gelangen die Komponenten
A1 und B1 in eine Vormischkammer 118; über die Dosierpumpen 116,117 gelangen die Komponenten A2 und B2 in
eine Vormischkammer 119 und durcheilen anschließend,
gegebenenfalls unter Nachvermischung der Vorgemische,
die Hauptmischkammer 120, aus der sie in ein Formwerkzeug entlassen werden.

Le A 19 902

- 21 -

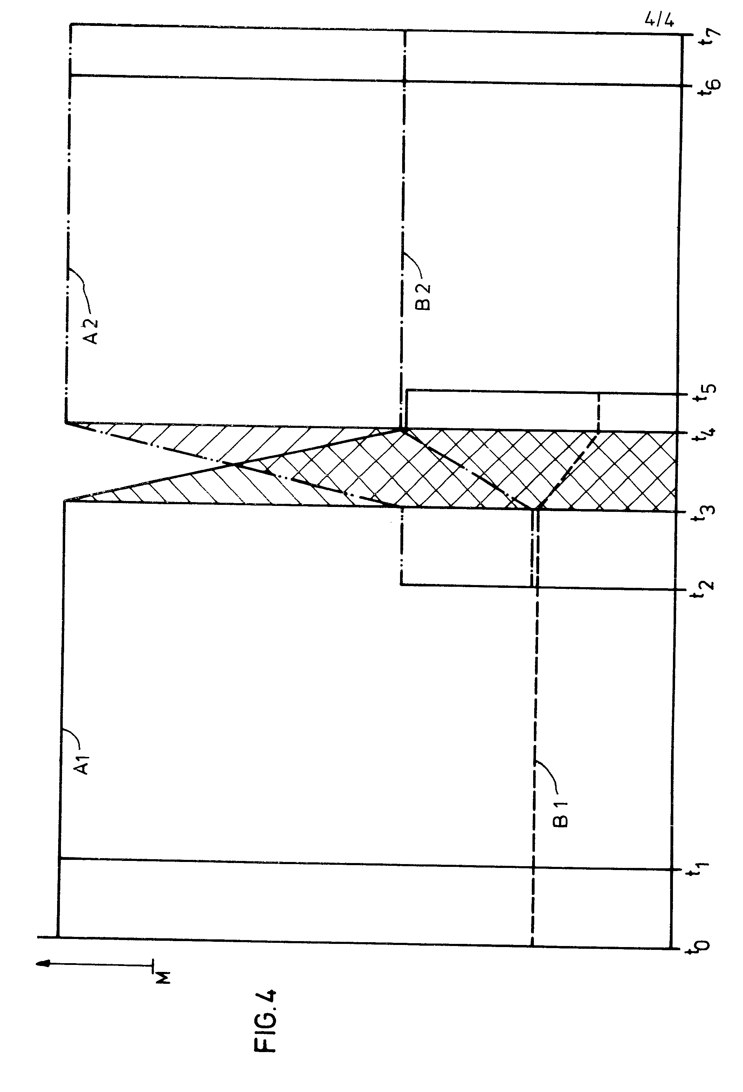

Das mit dieser Vorrichtung durchgeführte Verfahren sei anhand eines Beispiels erläutert, wobei Fig. 4 den zeitlichen Verfahrensablauf im Diagramm wiedergibt:

Bei diesem Verfahren wird zunächst ein aus den Reaktionskomponenten A1 und B1 bestehendes Reaktionsgemisch zur Bildung der Lauffläche eines Fahrzeugreifens im volumetrischen Mengenverhältnis 100:25 zwischen $t_1$ und $t_4$ in die Mischkammer 118 dosiert, dort vermischt und in eine Schleudergießform eingetragen. Kurz vor Ende des Mischvorganges für das erste Reaktionsgemisch aus den Komponenten A1 und B1 wird zu einem vorprogrammierten Zeitpunkt $t_3$, ein aus den Reaktionskomponenten A2 und B2 bestehendes zweites Reaktionsgemisch zur Bildung einer Karkasse, bei einem volumetrischen Dosierverhältnis 100:50 zugeschaltet. Während des resultierenden Überlappungsbereiches $t_3$-$t_4$ wird die Dosiergeschwindigkeit des ersten Reaktionsgemisches bei zu jedem Zeitpunkt konstanten Dosierverhältnis 100:25 auf die Hälfte des Ausgangswertes reduziert. Anschließend wird bei $t_4$ der Mischhub für das erste Reaktionsgemisch A1/B1 beendet. Zwischen $t_3$ und $t_4$ wird die Dosiergeschwindigkeit des zweiten Reaktionsgemisches bei konstantem Dosierverhältnis 100:50 verdoppelt und zwischen $t_4$ und $t_5$ konstant gehalten. Bei $t_6$ wird der zwischen $t_3$ und $t_6$ andauernde Mischhub für das zweite Reaktionsgemisch A2/B2, beendet und damit auch der Formenfüllvorgang abgeschlossen.

Im Diagramm gemäß Fig. 4 sind alle Dosiervorgänge zur Durchführung des Verfahrens dargestellt. Es bedeuten:

Le A 19 902

A1 und B1 = Reaktionskomponenten zur Bildung eines Reaktionsgemisches A1/B1 für eine Lauffläche;

A2 und B2 = Reaktionskomponenten zur Bildung eines Reaktionsgemisches A2/B2 für eine Reifenkarkasse.

$t_0$ = Start Dosierung
$t_0-t_1$ = Vorhub Reaktionskomponenten A1 und B1
$t_1-t_4$ = Mischhub Reaktionskomponenten A1 und B1
$t_4-t_5$ = Nachhub Reaktionskomponenten A1 und B1
$t_2-t_3$ = Vorhub Reaktionskomponenten A2 und B2
$t_3-t_6$ = Mischhub Reaktionskomponenten A2 und B2
$t_6-t_7$ = Nachhub Reaktionskomponenten A2 und B2
$t_7$ = Ende des Dosiervorganges
$t_3-t_4$ = Überlappungsbereich

Wesentlicher Vorteil des Verfahrens ist, daß im schraffierten Überlappungsbereich $t_3-t_4$ das aus den Reaktionskomponenten A1 und B1 bestehende erste Reaktionsgemisch A1/B1 zur Bildung einer weichen Lauffläche in vorprogrammierter Weise gegen ein zweites, aus den Reaktionskomponenten A2 und B2 bestehendes zweites Reaktionsgemisch A2/B2 zur Bildung einer steifen Karkasse austauschbar ist. Nach diesem Verfahren ist es also erstmals möglich, den schroffen, für dynamische Beanspruchungen ungenügenden Übergang von weichem auf steifes Elastomer zu verhindern und eine vorprogrammierte Übergangszone (Überlappungsbereich) zwischen den beiden unterschiedlichen Reaktionsgemischen zu schaffen. Zusätzlich werden bei dieser "Naß-in-Naß"-

Le A 19 902

- 23 -

Verarbeitung Haftungs- und Entlüfungsprobleme eliminiert.

Beispiel

Im Schleudergießverfahren soll ein PKW-Reifen aus Polyurethan-Mehrkomponentenreaktionswerkstoffen hergestellt
werden. Dazu werden 4 l eines Reaktionsgemisches A1/B1 für
die Lauffläche und 4 l eines Reaktionsgemisches A2/B2
für die Karkasse benötigt. Dabei sollen in einem Überlappungsbereich beide Reaktionsgemische gleichzeitig
dosiert und vermischt werden. Das als erstes zugeführte Reaktionsgemisch A1/B1 soll in seiner Dosiergeschwindigkeit stetig auf die Hälfte reduziert und anschließend
seine Zufuhr während des Mischhubes beendet werden.
Der Mischhub für das Reaktionsgemisch A2/B2 soll zu
Beginn des Überlappungsbereiches begonnen werden. Innerhalb dieses Überlappungsbereiches soll die Dosiergeschwindigkeit stetig auf die Endgeschwindigkeit verdoppelt werden. Nach Beendigung des Überlappungsintervalls
soll für die Karkassenbildung nur noch das Reaktionsgemisch A2/B2 zugeführt werden.

Das volumetrische Dosierverhältnis der Reaktionskomponenten A1 und B1 soll sein: A1:B1 = 100:25.

Das volumetrische Dosierverhältnis der Reaktionskomponenten A2 und B2 soll sein: A2:B2 = 100:50.

Die Schrittmotoren der elektrohydraulischen Linearverstärker 110,111,112,113 arbeiten mit I = 400 Impulsen/
Umdrehung.

Le A 19 902

- 24 -

Die Gewindespindeln mit Spindelmuttern weisen eine Steigung von s = 20 mm auf, was einem Kolbenhub von 0,05 mm pro Impuls entspricht. Die Kolbendurchmesser der Dosierpumpen 114,115,116 und 117 betragen jeweils 11 cm; ihre Kolbenquerschnittsflächen betragen jeweils 95,033 $cm^2$, und die Volumenschritte pro Impuls betragen o,47517 $cm^3$. Der Kolbendurchmesser der Dosierpumpe 115 beträgt 5,5 cm, die Kolbenquerschnittsfläche 23,758 $cm^2$ und der Volumenschritt pro Impuls 0,11879 $cm^3$.

Die Menge an Reaktionsgemisch A1/B1 beträgt 4000 ml. Dabei entfallen auf die Reaktionskomponente A1 3200 ml, was 6734 Volumenschritten entspricht und auf die Reaktionskomponente B1 entfallen 800 ml, was ebenfalls 6734 Volumenschritten entspricht.

Auch die Menge an Reaktionsgemisch A2/B2 beträgt 4000 ml. Davon entfallen auf die Reaktionskomponente A2 2666,66 ml, was 5612 Volumenschritten entspricht; auf die Reaktionskomponente B2 entfallen 1333,33 ml, was 2806 Volumenschritten entspricht.

Jedes Reaktionsgemisch soll innerhalb von max. 15 sec dosiert werden. Zu diesem Zweck wird die zeitliche Volumenschrittfolge wie folgt programmiert:

Der Steuerfrequenzgenerator 101 wird auf eine Impulsfrequenz von 1000 Hz eingestellt. Die Programmierung der Steuerfrequenzen in den Steuerwerken 102,103,104, 105 geschieht wie folgt:

Le A 19 902

Reaktionskomponenten A1 und B1:

$t_0-t_3$ : 500 Volumenschritte pro sec

$t_3-t_4$ : stetige Veränderung von 500 auf 250 Volumenschritte pro sec

$t_4-t_5$ : 250 Volumenschritte pro sec.


Reaktionskomponenten A2 und B2:

$t_2-t_3$ : A2 = 250 Volumenschritte pro sec
         B2 = 125 Volumenschritte pro sec

$t_3-t_4$ : stetige Veränderung von 250 auf 500 (A2) bzw.
         125 auf 250 (B2) Volumenschritte pro sec

$t_4-t_7$ : A2 = 500 Volumenschritte pro sec
         B2 = 250 Volumenschritte pro sec.


Die Zeitpunkte $t_1-t_7$ werden wie folgt programmiert:

1.   $t_1$ : Beginn des Mischhubes A1/B1, Ende des Vor-
          hubes A1/B1

    $t_0-t_1$ : 1000 Volumenschritte der Komponente A1.


2.   $t_2$ : Beginn des Vorhubes A2/B2 mit 250 (A2) bzw.
          125 (B2)  Volumenschritten pro sec

    $t_1-t_2$ : 5000 Volumenschritte der Komponente A1.


3.   $t_3$ : Beginn des Überlappungsbereiches, Start des
          Mischhubes A2/B2

    $t_1-t_3$ : 6000 Volumenschritte der Komponente A1.


Le A 19 902

4.  $t_4$ : Ende des Überlappungsbereiches
    Ende des Mischhubes A1/B1

    $t_1$-$t_4$ : Mischhub A1/B1. 6734 Volumenschritte der
    Komponente A1, dabei zwischen

    $t_3$-$t_4$ : stetige Veränderung A1 und B1 von 500 auf
    250 Volumenschritten pro sec und stetige
    Erhöhung von A2 von 250 auf 500 bzw. von
    B2 von 125 auf 250 Volumenschritte pro sec.

5.  $t_5$ : Ende des Nachhubes A1/B1
    $t_4$-$t_5$ : 300 Volumenschritte der Komponente A1.

6.  $t_6$ : Ende des Mischhubes A2/B2
    $t_3$-$t_6$ : Mischhub A2/B2. 5612 Volumenschritte der
    Komponente A2.

7.  $t_7$ : Ende des Nachhubes A2/B2
    $t_6$-$t_7$ : 300 Volumenschritte der Komponente A2.

- 27 -

Patentansprüche

1) Verfahren zum Herstellen eines fließfähigen Reaktionsgemisches aus mindestens zwei Reaktionskomponenten, beispielsweise Polyurethan bildende Komponenten, wobei die Komponenten getrennt in hydraulische Druckräume gefördert werden und aus diesen in eine Mischzone dosiert werden, dort vermischt und das Gemisch in einen Hohlraum entlassen wird, wobei die Dosierung der Komponenten für jede Komponente getrennt in einstellbaren, diskreten, gleich großen Volumenschritten erfolgt und wobei sowohl deren zeitliche Aufeinanderfolge zur Einstellung einer vorgewählten Dosiergeschwindigkeit und eines vorgewählten Dosierverhältnisses als auch deren Anzahl zur Einstellung einer vorgewählten Dosiermenge auf elektrohydraulischem Wege erzielt wird, dadurch gekennzeichnet, daß die zeitliche Aufeinanderfolge der Volumenschritte entsprechend dem vorgewählten Dosierverhältnis für jede Komponente getrennt aus einer gemeinsamen einstellbaren Steuerfrequenz abgeleitet wird.

2) Verfahren nach Anspruch 1, dadurch gekennzeichnet, daß das Verhältnis der zeitlichen Aufeinanderfolgen der diskreten Volumenschritte für die verschiedenen Komponenten untereinander während des Dosiervorganges nach einem vorgegebenen Programm verändert wird.

Le A 19 902

3) Verfahren nach Anspruch 1 oder 2, dadurch gekennzeichnet, daß die gemeinsame Steuerfrequenz zur Erzeugung der verschiedenen Volumenschrittfolgen für die einzelnen Komponenten nach einem vorgegebenen Programm während des Dosiervorganges zeitlich verändert wird.

4) Vorrichtung zur Durchführung des Verfahrens, bestehend aus einer Dosiereinheit je Komponente, die aufgebaut ist aus Kolben und Zylinder, einer von einem Vorratsgefäß in den Zylinder führenden Zuleitung, einer vom Zylinder zur Mischkammer führenden Ableitung, und gegebenenfalls einer Rücklaufleitung und aus einer Antriebseinheit je Dosiereinheit, die als elektrohydraulischer Linearverstärker ausgebildet ist, bestehend aus einem Schrittmotor für eine Steuereinrichtung, die mit einer Kolben-Zylinder-Einheit gekoppelt ist; wobei dem Linearverstärker eine Steuerelektronik zugeordnet ist, die mindestens einen einstellbaren Steuerfrequenzgenerator umfaßt, dadurch gekennzeichnet, daß der Steuerfrequenzgenerator (14,57; 101) sämtlichen Linearverstärkern (68,69; 110,111,112,113) zugeordnet ist, wobei zwischen Steuerfrequenzgenerator (14,57; 101) und den Linearverstärkern (68,69; 110,111, 112,113) jeweils ein einstellbarer Frequenzuntersetzer (38a, 38b; 102,103,104,105) zugeordnet ist.

Le A 19 902

Taste für Start des Dosierhubes

Potentiometer f. Kolbengeschw. b. Dosierhub

Potentiometer f. Kolbengeschw. b. Rückhub

Taste für Start des Rückhubes

Digitalanzeigegerät f. Vor- u. Mischhub

Steuerfrequenzgenerator f. Dosierhub

Kippschalter f. Dosier- u. Rückhub

Steuerfrequenzgenerator f. Rückhub

Vorwahlschalter f. Vorhub

Digitalvergleicher f. Vorhub

Frequenzuntersetzer f. Komponente A

Vorwahlschalter f. Volumenschrittfolge f. Komponente A

Vorwahlschalter f. Mischhub

Digitalvergleicher f. Mischhub

Frequenzuntersetzer f. Komponente B

Vorwahlschalter f. Volumenschrittfolge f. Komponente B

Vorwahlschalter f. Nachhub

Digitalvergleicher f. Nachhub

Impulsleistungsverstärker f. Komponente A

Impulsleistungsverstärker f. Komponente B

Kolbenüberlaufsicherung f. Komponente A

Kolbenüberlaufsicherung f. Komponente B

FIG. 1

FIG. 2

# FIG. 3

```
                        ┌─────────────────┐
                        │ Steuerfrequenz- │──101
                        │ generator       │
                        └─────────────────┘
```

| programmierbares Steuerwerk f. Komponente A1 —102 | programmierbares Steuerwerk f. Komponente B1 —103 | programmierbares Steuerwerk f. Komponente B2 —104 | programmierbares Steuerwerk f. Komponente A2 —105 |
|---|---|---|---|
| Impulsleistungs-verstärker f. Komponente A1 —106 | Impulsleistungs-verstärker f. Komponente B1 —107 | Impulsleistungs-verstärker f. Komponente B2 —108 | Impulsleistungs-verstärker f. Komponente A2 —109 |
| elektrohydrauli-scher Linearver-stärker f. Komponente A1 —110 | elektrohydrauli-scher Linearver-stärker f. Komponente B1 —111 | elektrohydrauli-scher Linearver-stärker f. Komponente B2 —112 | elektrohydrauli-scher Linearver-stärker f. Komponente A2 —113 |
| Dosierpumpe f. Komponente A1 ◄A1 —114 | Dosierpumpe f. Komponente B1 ◄B1 —115 | B2► Dosierpumpe f. Komponente B2 —116 | A2► Dosierpumpe f. Komponente A2 —117 |

| Vormischkammer f. A1 mit B1 —118 | Hauptmischkammer f. A1/B1 mit A2/B2 —120 | Vormischkammer f. A2 mit B2 —119 |
|---|---|---|

0027892

3/4

FIG.4